# EUROPEAN PATENT APPLICATION

(11) **EP 2 833 247 A1**
(43) Date of publication of application: **04.02.2015**
(21) Application number: 13179190.7
(22) Date of filing: 02.08.2013
(51) Int. Cl.: G06F 3/044

(54) **Electronic device and method of detecting touches on a touch-sensitive display**

(71) Applicant: BlackBerry Limited, Waterloo, ON N2K 0A7 (CA)
(72) Inventor: Singh, Amit Pal, Waterloo Ontario N2L 3W8 (CA); Parekh, Premal Vinodchandra, Waterloo Ontario N2L 3W8 (CA); Dippel, Jeffrey John Paul, Waterloo Ontario N2L 3W8 (CA)
(74) Representative: Fennell, Gareth Charles

(57) **Abstract**

A method includes, during a touch-detecting scan of a touch-sensitive display, applying a first plurality of pulses to a first drive electrode coupled to a controller by a first conductor, and applying a second plurality of pulses to a second drive electrode coupled to the controller by a second conductor that is longer than the first conductor. The second plurality is greater in quantity than the first plurality.

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth^{®} capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size. Improvements in devices with touch-sensitive displays are desirable.

### Summary

A method includes, during a touch-detecting scan of a touch-sensitive display, applying a first plurality of pulses to a first drive electrode coupled to a controller by a first conductor, and applying a second plurality of pulses to a second drive electrode coupled to the controller by a second conductor that is longer than the first conductor. The second plurality is greater in quantity than the first plurality. An electronic device includes a touch-sensitive display comprising at least one controller, sense electrodes coupled to the controller, a first drive electrode coupled to the controller by a first conductor, and a second drive electrode coupled to the controller by a second conductor that is longer than the first conductor. The controller is configured to, during a touch-detecting scan of the touch-sensitive display, apply a first plurality of pulses to drive the first drive electrode and to apply a second plurality of pulses to drive the second drive electrode, and wherein the second plurality is greater in quantity than the first plurality.

### Brief Description of the Drawings

FIG. 1 is a block diagram of a portable electronic device in accordance with the disclosure.

FIG. 2 is a front view of an electronic device in accordance with the disclosure.

FIG. 3 is a front view of drive electrodes coupled to a controller in accordance with the disclosure.

FIG. 4 is a flowchart illustrating a method of detecting touches on a touch-sensitive display.

### Detailed Description

The following describes an apparatus and method of detecting a touch on a touch-sensitive display. The touch-sensitive display includes a first drive electrode coupled to a controller by a first conductor and a second drive electrode coupled to the controller by a second conductor. The second conductor is longer than the first conductor. For example, the second drive electrode may be spaced farther from the controller than the first drive electrode. During a touch-detecting scan of the touch-sensitive display, a first plurality of pulses is applied to drive the first drive electrode. A second plurality of pulses is applied to drive the second drive electrode. The second plurality is greater in quantity than the first plurality.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device or non-portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may be a portable electronic device without Wi-Fi communication capabilities, such as handheld electronic games, digital photograph albums, digital cameras, media players, e-book readers, and so forth. Examples of non-portable electronic devices include desktop computers, electronic white boards, smart boards utilized for collaboration, built-in monitors or displays in furniture or appliances, and so forth.

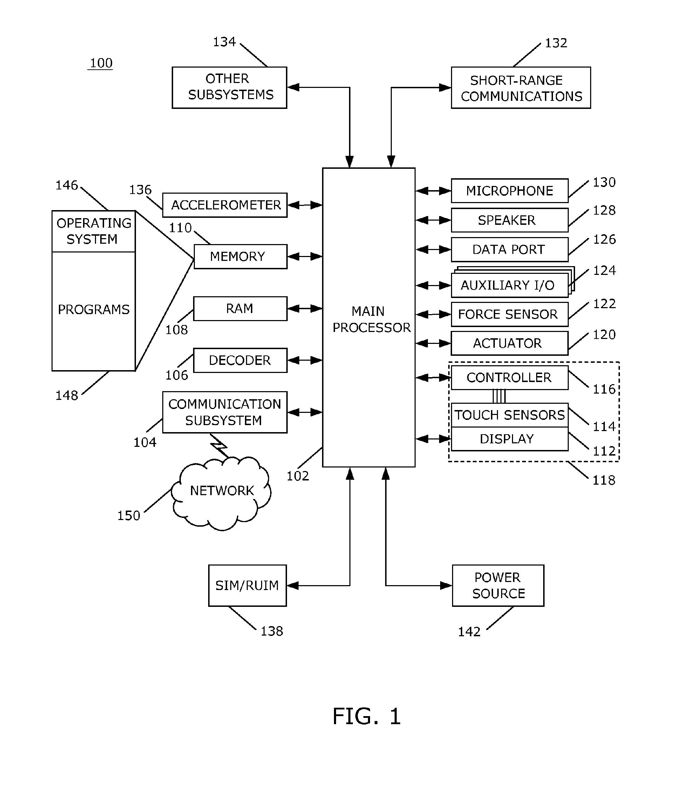

A block diagram of an example of an electronic device 100 is shown in FIG. 1. The electronic device 100 includes multiple components, such as a processor 102, e.g., a microprocessor or discrete control circuitry that controls the overall operation of the electronic device 100, which processor 102 is a hardware device or apparatus that may include memory. Communication functions, including data and voice communications, are performed through a communication subsystem 104. Data received by the electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. Short-range communications include, for example, Bluetooth^{®} communications, near-field communications (NFC), and other short or limited range communications. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the electronic device 100 may utilize a Subscriber Identity Module or a Removable User Identity Module (SIM/RUIM) card 138 for communication with a network, such as the wireless network 150. Alternatively, user identification information may be programmed into memory 110.

The electronic device 100 includes an operating system 146 and software programs, applications, or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the electronic device 100 is similar. The speaker 128 outputs audible information converted from electrical signals, and the microphone 130 converts audible information into electrical signals for processing.

The touch-sensitive display 118 may be a capacitive touch-sensitive display that includes capacitive touch sensors 114. The capacitive touch sensors 114 may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The optional actuator(s) 120 may be depressed or activated by applying sufficient force to the touch-sensitive display 118 to overcome the actuation force of the actuator 120. The actuator(s) 120 may be actuated by pressing anywhere on the touch-sensitive display 118. The actuator(s) 120 may provide input to the processor 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the electronic device, i.e., the touch-sensitive display 118 may not be fastened to the housing. A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

The touch-sensitive display 118 includes a display area in which information may be displayed, and a non-display area extending around the periphery of the display area. The display area generally corresponds to the area of the display 112. Information is not displayed in the non-display area by the display, which non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed under the non-display area. Touch sensors may be disposed in the non-display area, which touch sensors may be extended from the touch sensors in the display area or distinct or separate touch sensors from the touch sensors in the display area. A touch, including a gesture, may be associated with the display area, the non-display area, or both areas. The touch sensors may extend across substantially the entire non-display area or may be disposed in only part of the non-display area.

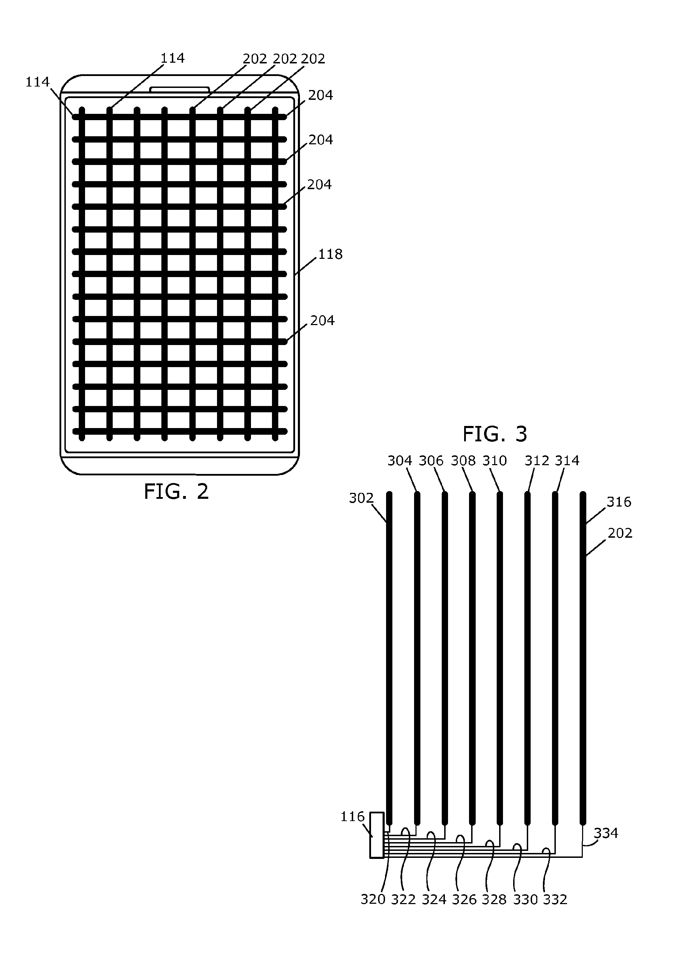

A front view of an electronic device 100 is shown in FIG. 2. The touch-sensitive display 118 includes touch sensors 114, also referred to as touch-sensing electrodes. The touch-sensors 114 are operably coupled to the controller 116.

The touch sensors 114 of the touch-sensitive display 118 include drive electrodes 202 and sense electrodes 204 that may be disposed on two layers of the touch-sensitive display 118 such that the drive electrodes 202 are disposed on one layer and the sense electrodes 204 are disposed on another layer. Alternatively, the drive electrodes 202 and the sense electrodes 204 may be disposed generally on one layer or plane of the touch-sensitive display 118. The drive electrodes 202 and the sense electrodes 204 are not visible when viewing the electronic device 100 without utilizing an optical instrument, such as a microscope, loupe, or magnifying glass, but are shown as visible in FIG. 2 for the purpose of illustration. In the example of FIG. 2, the drive electrodes 202 are the longer or vertical electrodes, and the sense electrodes 204 are the shorter or horizontal electrodes. Alternatively, the drive electrodes may be the shorter or horizontal electrodes, and the sense electrodes may be the longer or vertical electrodes. The sense electrodes 204 are utilized to detect changes in the signal at the nodes 206, which are the locations where the sense electrodes 204 cross over or under the drive electrodes 202.

Each drive electrode 202 and each sense electrode 204 is coupled to the controller 116. A front view of the drive electrodes 202 coupled to the controller 116 is shown in FIG. 3. Each of the drive electrodes 202 is coupled to the controller 116 by a conductor. In this example, the drive electrodes 202 include eight drive electrodes 302, 304, 306, 308, 310, 312, 314, 316 that are coupled to the controller by eight conductors 320, 322, 324, 326, 328, 330, 332, 334. The length of the conductor 320, 322, 324, 326, 328, 330, 332, 334 is based on the distance between the drive electrode 302, 304, 306, 308, 310, 312, 314, 316 and the controller 116. The drive electrode 302 that is closest to the controller 116 is coupled to the controller 116 by the shortest conductor 320. The drive electrode 316 that is the greatest distance from the controller 116 is coupled to the controller 116 by the longest conductor 334. The drive electrodes 304, 306, 308, 310, 312, 314 that are disposed between the drive electrode 302 that is closest to the controller 116 and the drive electrode 316 that is the greatest distance from the controller 116, are coupled to the controller 116 by conductors 322, 324, 326, 328, 330, 332 of lengths that are between the length of the conductor 320 and the length of the conductor 334. The conductors 320, 322, 324, 326, 328, 330, 332, 334 in this example are all made of the same material or materials and are generally uniform in width and thickness. Alternatively, the conductors may have non-uniform width, thickness, and/or material or composition.

A conductor, such as the conductor 334, may include a single wire, also referred to as a trace, or may include multiple wires or traces and other conductive elements, couplings, or other parts, that couple the drive electrode 316 to the controller 116. The trace is narrower than the width of the drive electrodes. In this example, the drive electrodes 302, 304, 306, 308, 310, 312, 314, 316 are coupled to the conductors 320, 322, 324, 326, 328, 330, 332, 334, and the conductors are coupled to a flex connector to couple the drive electrodes 302, 304, 306, 308, 310, 312, 314, 316 to the controller.

The drive electrodes 302, 304, 306, 308, 310, 312, 314, 316 are driven by the controller 116 such that signal comprising one or more pulses is carried by the drive electrodes 302, 304, 306, 308, 310, 312, 314, 316. Touch locations are determined from touch data obtained during one or more scans of the touch-sensitive display 118. The touch-sensitive display 118 is scanned by driving the drive electrodes 302, 304, 306, 308, 310, 312, 314, 316. Signals from sense electrodes 204 are received at the touch controller 116 in response to the pulses applied to the drive electrodes 302, 304, 306, 308, 310, 312, 314, 316. Each scan of the touch-sensitive display 118 includes multiple frames. In each frame, one of the drive electrodes 302, 304, 306, 308, 310, 312, 314, 316 is driven by applying multiple pulses to the drive electrode and signals are received from the sense electrodes 204. The drive electrodes 204 are driven in multiple frames and the sense electrodes 204 are utilized for sensing in each frame.

The electrical resistance of each conductor 320, 322, 324, 326, 328, 330, 332, 334 is related, at least in part, to the length of the conductor. The resistance is typically greater in the longest conductor 334 than in the shortest conductor 320. The drive signals are affected by the resistance. As a result, the time to charge the drive electrode 316 is greater than the time to charge the drive electrode 302. The sensed signal from the sense electrodes 204 is smaller in magnitude when the drive electrode 316 is driven, compared to the sensed signal from the sense electrodes 204 when the drive electrode 302 is driven. The difference in the sensed signal is caused by the difference in resistance values between the longest conductor 334 and the shortest conductor 320, the difference in time to charge the drive electrodes 302, 316, and so forth.

Because the signals received from the sense electrodes are affected by the differences in resistance values in the conductors 320, 322, 324, 326, 328, 330, 332, 334, the ability to detect touches or the strength of the signals from the sense electrodes, also known as touch-sensitivity, is reduced, which results in lower accuracy of touch location determination at locations or sensors further away from the controller 116 than at locations or sensors closer to the controller. For example, a sense electrode 204 exhibits greater sensitivity for a location near an edge of the touch-sensitive display 118 that is closest to the drive electrode 302 and sensitivity decreases towards the center and towards the opposite edge of the touch-sensitive display 118 because the controller is located near a corner of the touch-sensitive display 118 in this example. This decrease in sensitivity leads to reduced accuracy from one side of the touch-sensitive display 118 to the other side. In the example shown in FIG. 3, the controller is located near the corner of the touch-sensitive display. Alternatively, the controller may be located near one side of the touch-sensitive display, for example, generally centered along one side.

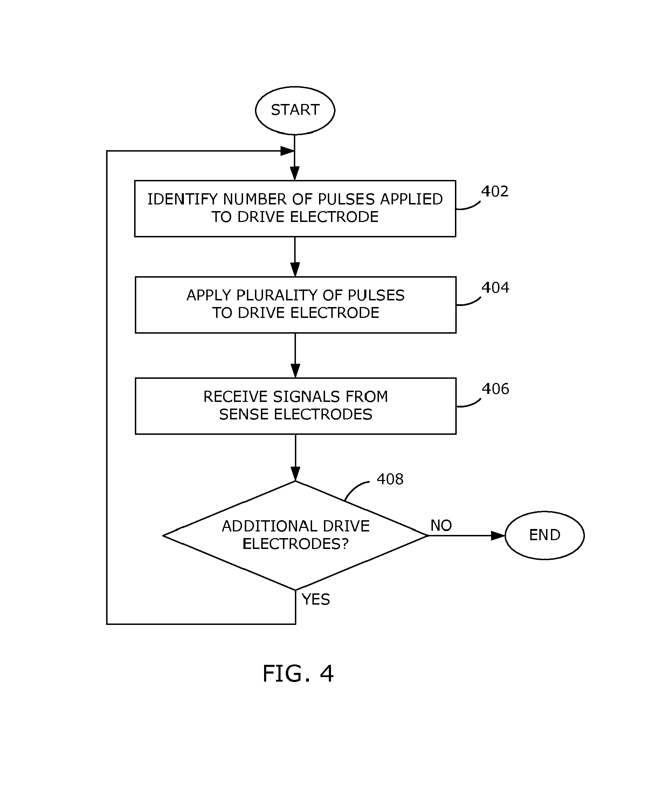

A flowchart illustrating an example of a method of detecting touches on a touch-sensitive display 118 is shown in FIG. 4. The method may be carried out by software executed, for example, by the controller 116. Coding of software for carrying out such a method is within the scope of a person of ordinary skill in the art given the present description. The method may contain additional or fewer processes than shown and/or described, and may be performed in a different order. Computer-readable code executable by at least one controller 116 or processor 102 of the electronic device 100 to perform the method may be stored in a computer-readable storage medium, device, or apparatus, which may be a non-transitory or tangible storage medium, device, or apparatus.

During operation of the portable electronic device 100, the touch-sensitive display 118 is scanned to detect touches. During a touch-detecting scan of the touch-sensitive display 118, the number or quantity of pulses applied to a drive electrode 302 is identified 402. The number or quantity of pulses applied to the drive electrode 202 is based on the electrical resistance, also referred to as a resistance value, of the conductor that couples the drive electrode to the controller 116. The number of pulses applied to the drive electrode 202 is related to the length of the conductor 320. The frequency at which the pulses are applied may be a frequency at which an acceptable level of noise is detected or any other suitable frequency.

The drive electrode 302 is driven by applying 404 the plurality of pulses to the drive electrode 302. A touch-detecting scan may begin at any one of the drive electrodes 302, 304, 306, 308, 310, 312, 314, 316. In response to the pulses applied to the drive electrode 302, signals are received 406 from the sense electrodes 204. The signals are received 406 over a length of time that is based on the frequency at which pulses are applied to the drive electrode 302. Changes in the signals between scans of the touch-sensitive display are utilized to detect touches.

When additional drive electrodes have not been driven during the touch-detecting scan, the process continues 406 with the next drive electrode at 402. The number or quantity of pulses applied to the drive electrode 304 is identified 402, and the next drive electrode 304 is driven by applying 404 the plurality of pulses to this drive electrode 304. A different drive electrode 302, 304, 306, 308, 310, 312, 314, 316 is driven in each successive frame of the touch-detecting scan. In this example, all drive electrodes 302, 304, 306, 308, 310, 312, 314, 316 are driven in a single touch-detecting scan. The same frequency may be utilized to drive all the drive electrodes in a single scan.

The flow chart of FIG. 4 illustrates one scan across the entire touch-sensitive display 118. Additional touch-detecting scans are performed utilizing the same process.

In the example of the drive electrodes shown in FIG. 3, a touch-detecting scan may begin by driving the drive electrode 302 that is closest to the controller 116. A drive signal comprising a first number or quantity of pulses is applied to the drive electrode 302, and, in response to the drive signal, sense signals are received from the sense electrodes 204. The first number or quantity of pulses may be, for example, eight pulses.

After driving the drive electrode 302 and receiving the signals from the sense electrodes 204, the next drive electrode 304 is driven. A drive signal comprising a second number of pulses is applied to the drive electrode 304, and, in response to the drive signal, sense signals are received from the sense electrodes 204. The second number or quantity of pulses may be, for example, nine pulses. An additional pulse is utilized to drive the drive electrode 304 to compensate for the greater resistance in the conductor 322 compared to the conductor 320.

A drive signal comprising a third number or quantity of pulses is applied to the drive electrode 306, and, in response to the drive signal, sense signals are received from the sense electrodes 204. The third number or quantity of pulses may be, for example, ten pulses.

A drive signal comprising a fourth number or quantity of pulses is applied to the drive electrode 308, and, in response to the drive signal, sense signals are received from the sense electrodes 204. The fourth number or quantity of pulses may be, for example, eleven pulses.

The drive electrodes 310, 312, 314, and 316 are also successively driven. The number or quantity of pulses utilized to drive the drive electrodes 310, 312, 314, 316 increases with the distance to the controller 116 or length of the associated conductor 328, 330, 332, 334. For example, the drive electrode 310 may be driven with a drive signal comprising 12 pulses, the drive electrode 312 may be driven with a drive signal comprising 13 pulses, the drive electrode 314 may be driven with a drive signal comprising 14 pulses, and the drive electrode 316 may be driven with a drive signal comprising 15 pulses.

All of the drive electrodes 302, 304, 306, 308, 310, 312, 314, 316 are driven at the same frequency. The number of pulses may differ from one drive electrode to the next, although the frequency of the pulses may be the same for different electrodes. The period of time in which a drive electrode is driven is based on the number of pulses applied to the drive electrode. The controller receives signals from a sense electrode during a length of time that may be the same for each sense electrode, regardless of the number of pulses of the drive signal. Thus, the length of time during which signals are received in response to the first number of pulses is the same as the length of time during which signals are received in response to the second number of pulses.

The number of pulses applied to the drive electrodes 202 may differ from one drive electrode to another to compensate for differences in resistance in the conductors that couple the drive electrodes to the controller. Thus, a drive electrode that is a greater distance away from the controller and therefore is coupled to the controller by a longer conductor, may be driven by a greater number pulses. The period or length of time during which signals are received from the sense electrodes 202 may remain the same for all conductors to reduce the chance of introducing noise during touch detection and to maintain consistent processing time.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
during a touch-detecting scan of a touch-sensitive display:
applying a first plurality of pulses to a first drive electrode coupled to a controller by a first conductor;
applying a second plurality of pulses to a second drive electrode coupled to the controller by a second conductor that is longer than the first conductor;
wherein the second plurality is greater in quantity than the first plurality.

2. The method according to claim 1, comprising, during the touch-detecting scan, applying a third plurality of pulses to a third drive electrode coupled to the controller by a third conductor that is longer than the second conductor, wherein the third plurality is greater in quantity than the second plurality.

3. The method according to claim 1, wherein the first plurality of pulses is applied at a first frequency and the second plurality of pulses is applied at the first frequency.

4. The method according to claim 1, wherein the second drive electrode is spaced from the controller by a distance that is greater than a distance from the controller to the first drive electrode.

5. The method according to claim 1, comprising:
in response to the first plurality of pulses, receiving the first signals from sense electrodes; and
in response to the second plurality of pulses, receiving second signals from the sense electrodes.

6. The method according to claim 5, wherein the first signals are received from the sense electrodes for a first length of time and the second signals are received from the sense electrodes for a second length of time, and wherein the first length of time is equal to the second length of time.

7. A computer-readable storage device having computer-readable code executable by at least one controller of the portable electronic device to perform the method of claim 1.

8. An electronic device comprising:
a touch-sensitive display comprising:
at least one controller;
sense electrodes coupled to the controller;
a first drive electrode coupled to the controller by a first conductor;
a second drive electrode coupled to the controller by a second conductor that is longer than the first conductor;
wherein the controller is configured to, during a touch-detecting scan of the touch-sensitive display, apply a first plurality of pulses to drive the first drive electrode and to apply a second plurality of pulses to drive the second drive electrode, and
wherein the second plurality is greater in quantity than the first plurality.

9. The electronic device according to claim 8, comprising a third drive electrode coupled to the controller by a third conductor that is longer than the second conductor, wherein the controller is configured to, during the touch-detecting scan, apply a third plurality of pulses to the third drive electrode, and wherein the third plurality is greater in quantity than the second plurality.

10. The electronic device according to claim 8, wherein first signals are received from the sense electrodes for a first length of time in response to the first plurality of pulses, and second signals are received from the sense electrodes for a second length of time in response to the second plurality of pulses, and wherein the first length of time is equal to the second length of time.

11. The electronic device according to claim 8, wherein the first plurality of pulses is applied at a first frequency and the second plurality of pulses is applied at the first frequency.

12. The electronic device according to claim 8, wherein the second drive electrode is spaced from the controller by a distance that is greater than a distance from the controller to the first drive electrode.

13. The electronic device according to claim 8, wherein the first plurality of pulses comprises a quantity of pulses based on a resistance value of the first conductor, and the second plurality of pulses comprises a quantity of pulses based on a resistance value of the second conductor.
